# EUROPEAN PATENT APPLICATION

(11) **EP 3 001 665 A1**
(43) Date of publication of application: **30.03.2016**
(21) Application number: 15182460.4
(22) Date of filing: 26.08.2015
(51) Int. Cl.: H04N 1/193, H04N 1/195, H04N 5/369

(54) **IMAGE SENSOR AND IMAGING APPARATUS**

(30) Priority: 26.09.2014 JP 2014197112
(71) Applicant: NEC Corporation, Minato-ku, Tokyo 108-8001 (JP)
(72) Inventor: ITOU, Yoshiyuki, Tokyo, 108-8001 (JP)
(74) Representative: Vossius & Partner Patentanwälte Rechtsanwälte mbB

(57) **Abstract**

A resolving power is enhanced two-dimensionally without reducing a pixel size. For this purpose, when the direction of travel of a flying object is taken as a row direction and the direction orthogonal to the row direction is taken as a column direction, a plurality of sensor units each including a plurality of linear array sensors extending in the column direction are provided in the row direction, and the sensor units are arranged deviated by a preset block interval in the row direction relative to the sensor units adjacent to each other, as well as arranged deviated by a preset shift interval in the column direction.

## Description

This application is based upon and claims the benefit of priority from Japanese Patent Application No. 2014-197112, filed on September 26, 2014, the disclosure of which is incorporated herein in its entirety by reference.

### TECHNICAL FIELD

The present invention relates to an image sensor and an imaging apparatus.

### BACKGROUND ART

In recent years, acquisition of high quality images with small signal noise ratios (SNR), and high resolving powers is desired. The resolving power of acquired images mainly relies on a pixel size in an image sensor, and the resolving power can be improved by reducing the pixel size.

However, when the pixel size is reduced, an accumulation charge amount is decreased, and thus SNR will be deteriorated. In particular, in a time delay integration (TDI) charge coupled device (CCD), SNR may be worse even when an optical system capable of obtaining sufficient light amount is used.

To deal with such a problem, for example, Japanese Patent Application Laid-Open No. 1999-68081 discloses a linear sensor as illustrated in Fig. 6. The linear sensor is formed by three sensor columns 111, 112, 113 configured by arraying pixels 1, 2, ... in a main scanning direction, which pixels are accumulated by photoelectrically converting an incident light. Then, behind the sensor column 111, the sensor column 112 is arranged with a sensor pitch P being shifted by P/3 in a main scanning direction relative to the sensor column 111. Furthermore, behind the sensor column 12, a sensor column 113 is arranged with a sensor pitch P being shifted by P/3 relative to the sensor column 12 in the main scanning direction. This will enable the resolution of reproduced image to be enhanced.

However, in a configuration according to Japanese Patent Application Laid-Open No. 1999-68081, the resolving power in the main scanning direction can be improved because the sensor pitch P is configured to be shifted by P/3 for each column, whereas such a definition is not made on a column interval. Therefore, enhancement of one-dimensional resolving power is possible, but there is a problem that enhancement of two-dimensional resolving power may not be attained.

### SUMMARY

A main object of the present invention is to provide an image sensor and an imaging apparatus capable of improving two-dimensional resolving power, without reducing a pixel size.

### (Means for Solving the Problem)

To solve the above-described problem, the invention relating to an image sensor loaded on a flying object and configured to receive a light from an object to be imaged to convert the light into an electrical signal, when a direction of travel of the flying object is taken as a row direction and a direction orthogonal to the row direction is taken as a column direction, is characterized in that a plurality of sensor units each including a plurality of linear array sensors each extending in the column direction are provided in the row direction, and the sensor units are arranged spaced apart by a preset block interval in the row direction relative to adjacent sensor units, as well as arranged spaced apart by a preset shift interval in the column direction.

Further, the invention relating to the imaging apparatus is characterized to include the above-described image sensor loaded on the flying object, and a data processing device for generating and outputting image data by using data acquired by the image sensor.

### (Advantageous Effect of the Invention)

According to the present invention, since the sensor unit has been arranged under a predetermined condition, it becomes possible to improve the resolving power two-dimensionally without reducing the pixel size.

### BRIEF DESCRIPTION OF THE DRAWINGS

Fig. 1 is a block diagram of an imaging apparatus according to an exemplary embodiment.
Fig. 2 is a diagram illustrating another pixel array structure different from a pixel array structure of the image sensor illustrated in Fig. 1.
Fig. 3A is a diagram illustrating a pixel array structure of a publicly-known image sensor, and is a diagram illustrating the publicly-known pixel array structure corresponding to Fig. 1.
Fig. 3B is a diagram illustrating the pixel array structure of the publicly-known image sensor, and is a diagram illustrating the publicly-known pixel array structure corresponding to Fig. 2.
Fig. 3C is a diagram illustrating the pixel array structure of the publicly-known image sensor, and is a diagram illustrating spatial information that spatially represents pixel data acquired by the image sensor illustrated in Fig. 3A.
Fig. 4 is a diagram illustrating spatial information acquired by the image sensor illustrated in Fig. 1.
Fig. 5 is a diagram for explaining an enhancement of the resolving power, in which (a) illustrates a luminance value distribution of the target to be imaged, (b) illustrates photographing data obtained by a sensor block, (c) illustrates photographing data obtained by other sensor blocks, and (d) illustrates data obtained by combining the photographing data obtained by the sensor block and other sensor blocks by a data processing device.

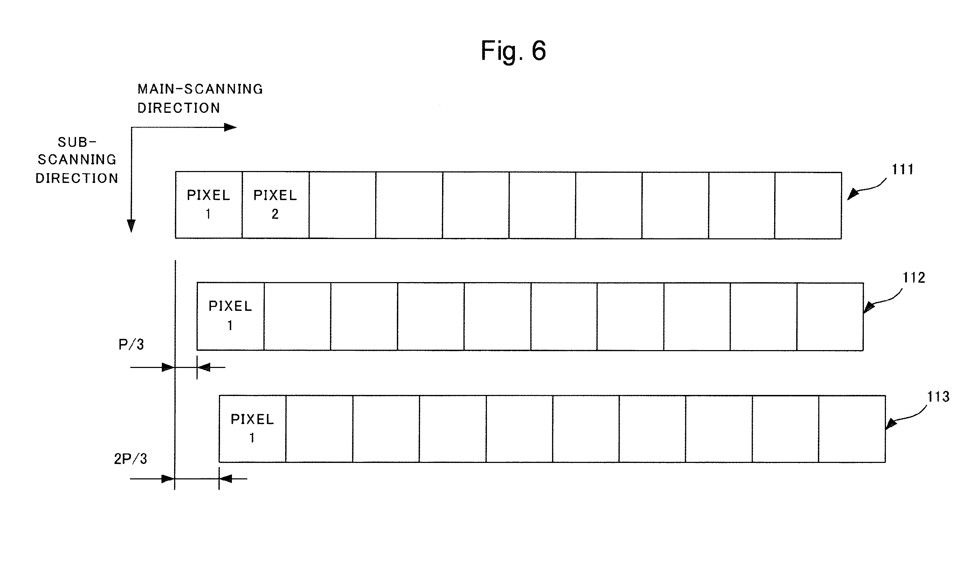

Fig. 6 is a diagram illustrating a configuration of a linear sensor to be applied to description of related technology.

### EXEMPLARY EMBODIMENT

An exemplary embodiment of the present invention will be described. A push broom scheme may be used for remote sensing in a flying object such as a satellite. The push broom scheme acquires two-dimensional image by using an image sensor (linear array sensor) formed by arranging one-dimensionally a plurality of photoelectric transducers. At this time, the direction of the image sensor is set to be orthogonal to the direction of travel of the flying object, and two-dimensional image data is obtained by deploying at each time the image data imaged at each predetermined time.

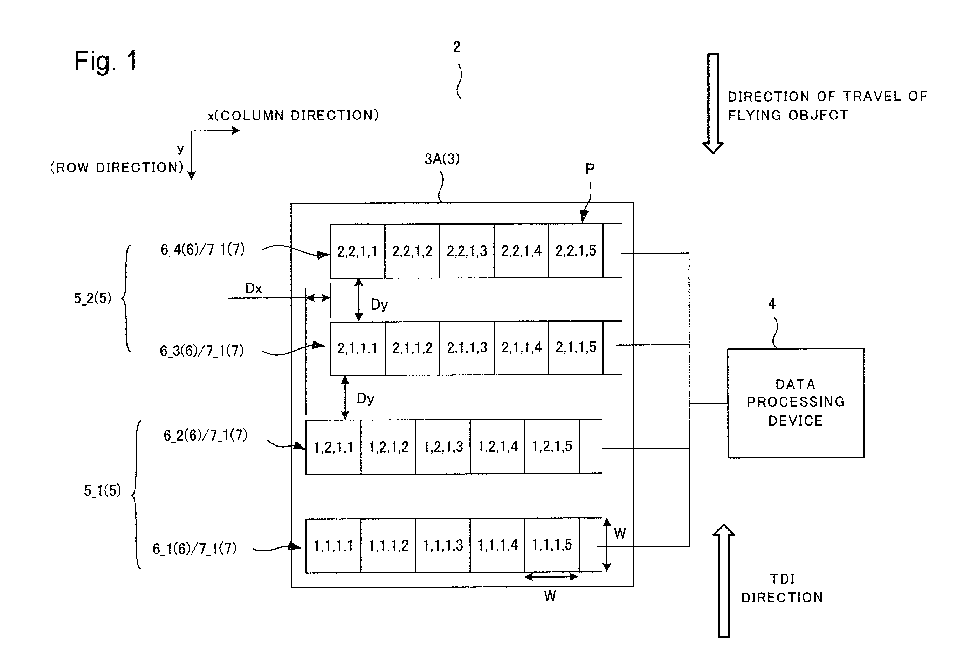

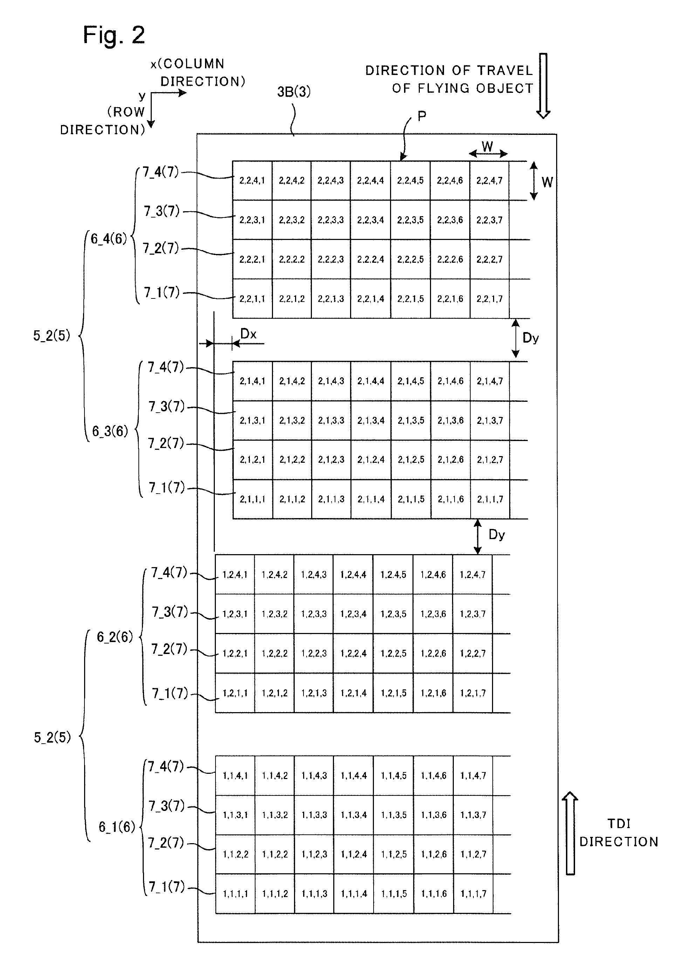

Fig. 1 and Fig. 2 are block diagrams of an imaging apparatus 2 (2A, 2B) according to the exemplary embodiment which imaging apparatus 2 is preferred to be used for such a push broom scheme. The imaging apparatus 2 is provided with at least an image sensor 3 (3A, 3B), and a data processing device 4.

In the following, the direction of travel of the flying object is denoted as y-axis direction (or a row direction), and the direction orthogonal to the y-axis direction is denoted as x-axis (or a column direction). In addition, the size of a pixel P is written as W.

The image sensor 3 is provided with N sets of the sensor units 5 (N is a positive integer of 1 or more). The respective sensor units 5 are arranged deviated from each other by an interval Dy in the row direction, and arranged by an interval Dx in the column direction. The sensor unit 5 is provided with N sets of sensor blocks 6. The respective sensor blocks 6 are arranged deviated from each other by an interval Dy in the row direction. The sensor blocks 6 are arranged such that a plurality of linear array sensors 7 be adjacent to each other in the row direction. The linear array sensor 7 is a time delay integration charge-coupled device, which is formed such that a plurality of pixels P each are arrayed in the column direction.

In the following, the interval Dx is described as a shift interval Dx, and the interval Dy is described as a block interval Dy. At this time, the shift interval Dx is given by Dx = W/N, and the block interval Dy is given by Dy = W* (k+1/N). Incidentally, k is a positive integer of 1 or more. Then, the shift interval Dx is along X-axis direction (column direction), and the block interval Dy is along Y-axis direction (row direction).

The image sensor 3A illustrated in Fig. 1 is formed by two sets (N=2) of the sensor units 5_1, 5_2. Each of the sensor units 5_1, 5_2 is formed by 4 sets (N*N=4) of sensor blocks 6_1 to 6_4. Each of the sensor blocks 6 is formed by 1 set of a linear array sensor 7_1.

The image sensor 3B illustrated in Fig. 2 differs from the image sensor 3A illustrated in Fig. 1 in that the sensor block 6 is formed by 4 sets of the linear array sensors 7_1 to 7_4, but operation is generally the same. Thereupon, in the following description, the image sensor 3A illustrated in Fig. 1 will be described as an example.

Here, the integer N will be described. N is a number indicating a magnification when the resolving power is enhanced without changing a pixel size in the existing image sensor (i.e. without changing charge accumulation amount or image data transfer time or the like). For example, in the case of N=2, when the conditions of the above-described shift interval Dx, and the block interval Dy are satisfied, resolving powers in the X-axis direction and Y-axis direction are doubled respectively (a resolving power four times higher in two-dimensional image).

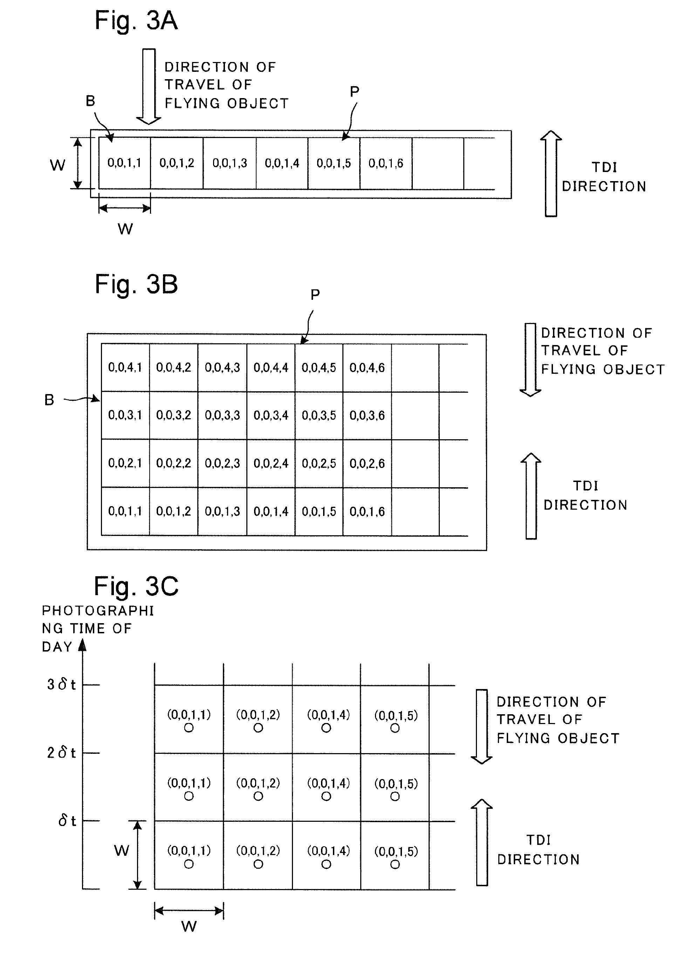

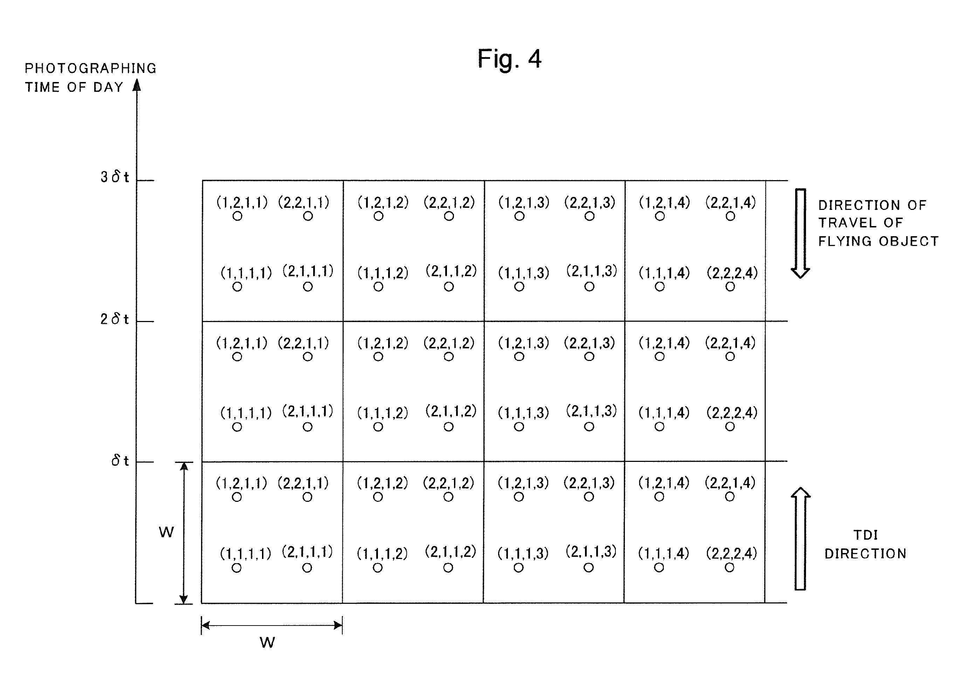

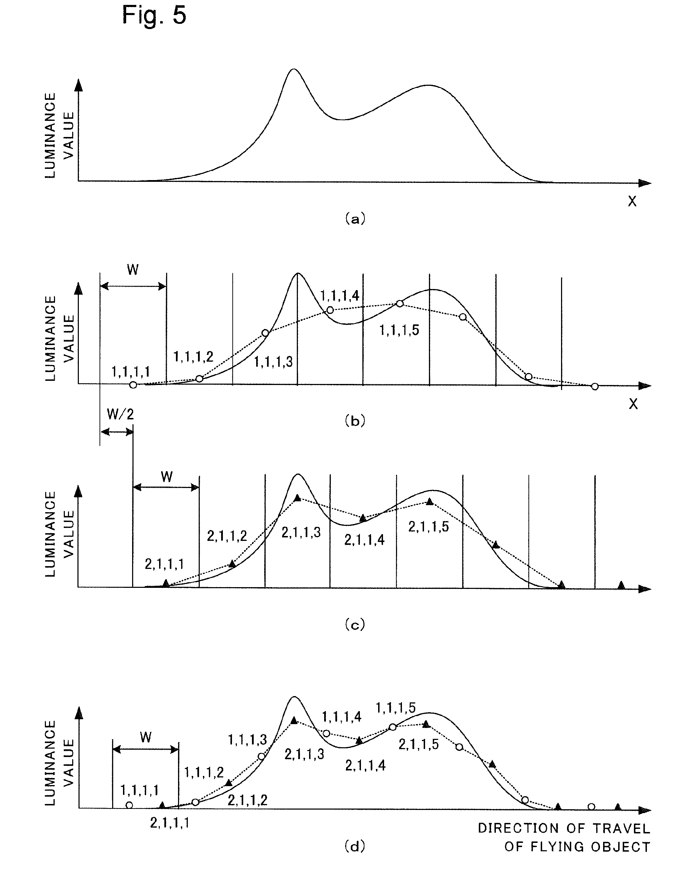

This interaction effect will be described with reference to Fig. 4 and Fig. 5, by using the pixel array structure of general publicly-known image sensor illustrated in Fig. 3A to Fig. 3C as a reference.

Fig. 3A is a diagram illustrating a publicly-known pixel array structure corresponding to Fig. 1, Fig. 3B is a diagram illustrating a publicly-known pixel array structure corresponding to Fig. 2, and Fig. 3C is a diagram illustrating spatial information (corresponding to two-dimensional image data) that represents spatially pixel data acquired by the image sensor illustrated in Fig. 3A. Further, Fig. 4 is a diagram illustrating spatial information acquired by the image sensor 3A illustrated in Fig. 1.

Then, each pixel P is identified by symbols (number of the sensor unit 5, number of the sensor block 6, number of linear array sensors 7, number of pixel P of the linear array sensors). For example, (1,2,1,3) in Fig. 1 indicates the third pixel P for the sensor unit 5_1, the sensor block 6_2, and the linear array sensor 7_1.

As described above, the image sensor 3 according to the exemplary embodiment is provided with N sets of the sensor units 5, and a positional relationship of the respective sensor units 5 is defined by the shift interval Dx or the block interval Dy.

Spatial information obtained by the publicly-known image sensors contains one piece of information (e.g., luminance value or the like) in a range (W*W range) corresponding to the pixel size W, as illustrated in Fig. 3C. In Fig. 3C, image data obtained by imaging with 1 set of linear array sensor of Fig. 3A is deployed for each photographing time interval (δt in Fig. 1), thus constituting two-dimensional image.

In contrast, spatial information obtained by the image sensor 3A according to the exemplary embodiment contains four pieces of information in a range corresponding to the pixel size W, as illustrated in Fig. 4. This means that the spatial information illustrated in Fig. 4 is equivalent to a resolving power four times higher than the spatial information illustrated in Fig. 3C.

Now, suppose that a flying object flying in an upward direction relative to paper surface photographs an object (consider a linear object) having a luminance value distribution as illustrated in Fig. 5 (a). However, luminance values illustrated in Fig. 5 are photographing data obtained by the sensor block 6_1 and sensor block 6_3 illustrated in Fig. 1. Then, Fig. 5(b) denotes photographing data obtained by the sensor block 6_1, and Fig. 5(c) denotes photographing data obtained by the sensor block 6_2. Further, Fig. 5(d) denotes data obtained by combining by the data processing device 4, photographing data obtained by the sensor block 6_1 and the sensor block 6_3. The diagram representing combined data with respect to all pixels is equivalent to spatial information (rectangular spatial information included during a photographing time of the day δt) of Fig. 4.

Data of Fig. 5(b) and data of Fig. 5(c) are deviated from each other by half of the pixel size W. This corresponds to the fact that the sensor block 6_1 and the sensor block 6_3 are deviated from each other by the shift interval Dx. Needless to say, the sensor block 6_1 and the sensor block 6_3 are different in a photographing time of the day and therefore they are not photographing data at the same time of the day. Accordingly, the data processing device 4 is designed to adjust such difference of the photographing time. In other words, the photographing data by the sensor block 6_3 is delayed.

Without changing the pixel size to the pixel size in the publicly-known image sensor in this manner, it becomes possible to improve the resolving power. At this time, since the image size is not changed, an electric charge amount accumulated by pixels is not changed. Therefore, it becomes possible to improve the resolving power without lowering SNR.

Further, since the pixel size is not changed, there is no need to change the image data transfer speed. Therefore, there is no need to change a data processing speed.

### (Reference Signs List)

- 2: Imaging apparatus
- 3, 3A, 3B: Image sensor
- 4: Data processing device
- 5, 5_1, 5_2: Sensor unit
- 6, 6_1 to 6_4: Sensor block
- 7, 7_1 to 7_4: Linear array sensor

## Claims

1. An image sensor to be mounted on a flying object, configured to receive a light from an object to be imaged to convert the light into an electrical signal,
wherein, when a direction of travel of the flying object is taken as a row direction and a direction orthogonal to the row direction is taken as a column direction, a plurality of sensor units each including a plurality of linear array sensors extending in the column direction are provided in the row direction, and
wherein the sensor units are arranged deviated by a preset block interval in the row direction relative to adjacent sensor unit, as well as arranged deviated by a preset shift interval in the column direction.

2. The image sensor according to claim 1, wherein each of the sensor units includes at least one or more sensor blocks each formed with one or more linear array sensors arranged side by side in the row direction, and an interval in the row direction of the sensor blocks adjacent to each other is the block interval.

3. The image sensor according to claim 1 or claim 2, wherein,
when the size of pixels constituting the linear array sensor is denoted as W, the shift interval is given by W/N, and the block interval is given by W* (k + 1/N), where k and N are positive integers.

4. The image sensor according to any one of claims 1 to 3, wherein the linear array sensor is time delay integration charge coupled device.

5. An imaging apparatus comprising:
the image sensor according to any one of claims 1 to 4 mounted on a flying object; and
a data processing device configured to generate and output image data by using data acquired by the image sensor.

6. The imaging apparatus according to claim 5, wherein the data processing device is configured to generate image data in accordance with a push broom scheme.
